# EUROPEAN PATENT APPLICATION

(11) **EP 2 141 610 A2**
(43) Date of publication of application: **06.01.2010**
(21) Application number: 09163264.6
(22) Date of filing: 19.06.2009
(51) Int. Cl.: G06F 17/30

(54) **Navigation device, vehicle, and navigation program**

(30) Priority: 03.07.2008 JP 2008174355
(71) Applicant: AISIN AW CO., LTD., Anjo-shi, Aichi-ken 444-1192 (JP)
(72) Inventor: Kawauchi, Hiroshi, Anjo-shi, Aichi-ken 444-1192 (JP); Fujikawa, Norihisa, Anjo-shi, Aichi-ken 444-1192 (JP)
(74) Representative: Intes, Didier Gérard André

(57) **Abstract**

A navigation device (1) includes a technology that learns a history of operations in a location information search (a POI search). The navigation device learns, as learned keywords, search terms that a user has inputted, and the next time that the user inputs a search character string, the navigation device supports the user's search term input operation by presenting a learned keyword that matches the search character string and letting the user select it. The navigation device deletes and updates location information in conjunction with closings and the like of facilities, but it also deletes the learned keywords that it has learned for the purpose of searching for the corresponding location information. This makes it possible to prevent a situation in which location information has been deleted and cannot be searched even though the user has selected and inputted the learned keyword.

## Description

The disclosure of Japanese Patent Application No. 2008-174355 filed on July 3, 2008, including the specification, drawings and abstract is incorporated herein by reference in its entirety.

### BACKGROUND OF THE INVENTION

The present invention relates to a navigation device, a vehicle, and a navigation program, such as a navigation device, a vehicle, and a navigation program that learn a search term that a user has set.

### Description of the Related Art

In recent years, the guiding of vehicles by navigation devices has come to be widely used.
The navigation device is provided with a function that searches for a route from a departure point to a destination, a function that utilizes sensors such as a Global Positioning System (GPS) satellite receiver, a gyroscope, or the like to detect the vehicle's position, a function that displays the route to the destination and the current position of the vehicle on a map, and the like.

The navigation device may include a function that accepts an input of a search term from a user and sets the destination by searching for a location name (facility name) or the like that matches the search term, as does the navigation device for vehicle and storage medium described in Japanese Patent Application Publication No. JP-A-11-271084, for example.

A navigation device has also been developed that has a keyword input function to support the keyword inputted by the user. For example, keywords such as "mie re-i-n-bo-o ra-n-do" and the like may be established in advance in relation to an inputted character."mi", and when the user selects a keyword, the selected keyword is set in a search term setting space.

Incidentally, the inventors in the present application have developed, as an undisclosed technology, a technology that takes search terms that the user has inputted and learns them as keywords, then makes it possible to display and select the keywords that have been learned. This technology makes it possible to use the keywords that have been learned to enlarge upon the keywords that the provider of the navigation device has established. Note that, hereinafter, the keywords that the provider of the navigation device has established are called ordinary keywords, and the keywords that have been learned are called learned keywords.

### SUMMARY OF THE INVENTION

Location information is updated in conjunction with changes to actual facilities, and the keywords must be also added and deleted in conjunction with the changes.
In the case of the ordinary keywords, the provider of the navigation device establishes the keywords, so using an ID or the like, for example, linking the ordinary keywords to the location information makes it possible for the ordinary keywords to be updated along with the location information.
However, the learned keywords are established by storing the search terms that the user has inputted, so they are not linked to the location information. How best to delete an existing learned keyword that corresponds to location information that has been deleted has therefore become an issue.

Accordingly, an object of the present invention is to update the keywords in conjunction with the updating of the location information.

According to a first aspect of the present invention, a keyword can be deleted in conjunction with the deleting of a location information item by specifying a keyword that is used to search for the location information item that is to be deleted and deleting the keyword.
According to a second aspect of the present invention, it is possible to prevent the deleting of a keyword that is used to search for a location information item that will not be deleted.
According to a third aspect of the present invention, it is possible to delete, from among the keywords whose beginnings match the character string that the user has inputted, the keywords for which the matching location information items have been deleted.
According to a fourth aspect of the present invention, it is possible to delete, from among the keywords that match the character string that the user has inputted, the keywords for which the matching location information items have been deleted.
According to a fifth aspect of the present invention, in a case where a location information item that matches the keyword that the user has selected has been deleted, the user can be notified.
According to a sixth aspect of the present invention, a vehicle can be provided in which is mounted the navigation device that is described in any one of the first aspect to the fifth aspect.
According to a seventh aspect of the present invention, it is possible to provide a navigation program that implements in a computer the functions of the navigation device that is described in the first aspect.

### BRIEF DESCRIPTION OF THE DRAWINGS

FIG. 1 is a figure for explaining a system that provides support for narrowing down destination candidates;
FIG. 2 is a system configuration diagram of a navigation device;
FIG. 3 is a figure for explaining a destination data file;
FIG. 4 is a figure for explaining an ordinary keyword data file;
FIG. 5 is a figure for explaining a learned keyword data file;
FIG. 6 is a figure for explaining deletion information;
FIG. 7 is a figure that shows an example of a search term input screen;
FIG. 8 is a figure that shows another example of the search term input screen;
FIG. 9 is a figure for explaining a search results screen;
FIG. 10 is a flowchart for explaining a procedure for searching for a destination candidate;
FIG. 11 is a flowchart that shows a procedure for learned keyword deletion processing according to a first example;
FIG. 12 is an example of a screen display according to the first example;
FIG. 13 is a figure that shows an example of a learned keyword deletion screen;
FIG. 14 is a flowchart that shows a procedure for learned keyword deletion processing according to a second example;
FIG. 15 is a flowchart that shows a procedure for learned keyword deletion processing according to a third example;
FIG. 16 is a screen display example according to the third example;
FIG. 17 is a flowchart that shows a procedure for learned keyword deletion processing according to a fourth example; and
FIG. 18 is a screen display example according to the fourth example.

### DETAILED DESCRIPTION OF THE EMBODIMENTS

### (1) Overview of the embodiment

A navigation device includes a technology that learns a history of operations in a location information search (a POI search). The navigation device learns, as learned keywords, search terms that a user has inputted, and the next time that the user inputs a search character string, the navigation device supports the user's search term input operation by presenting a learned keyword that matches the search character string and letting the user select it.

The navigation device deletes and updates location information in conjunction with closings and the like of facilities, but it also deletes the learned keywords that it has learned for the purpose of searching for the corresponding location information.
This makes it possible to prevent a situation in which location information has been deleted and cannot be searched even though the user has selected and inputted the learned keyword.

As methods for deleting the learned keywords, in a method, all of the learned keywords are checked when the location information is updated, the learned keywords to be deleted are displayed, and the learned keywords to be deleted are deleted. In another method, after the location information is updated, when a search that uses the learned keywords is done and the candidates in the location information are displayed, the candidates that correspond to the location information that has been deleted are not displayed, and the corresponding learned keywords are deleted.

Another configuration can be used such that, in a case where the candidates in the location information are displayed by the search that is done after the location information is updated, and the user selects one of the candidates, a check is conducted as to whether or not the selected candidate can be inputted, and in a case where it cannot be inputted (a case in which the corresponding location information has been deleted), a message is displayed to the effect that the corresponding location information has been deleted, and the corresponding learned keywords are deleted.

### (2) Details of the embodiment

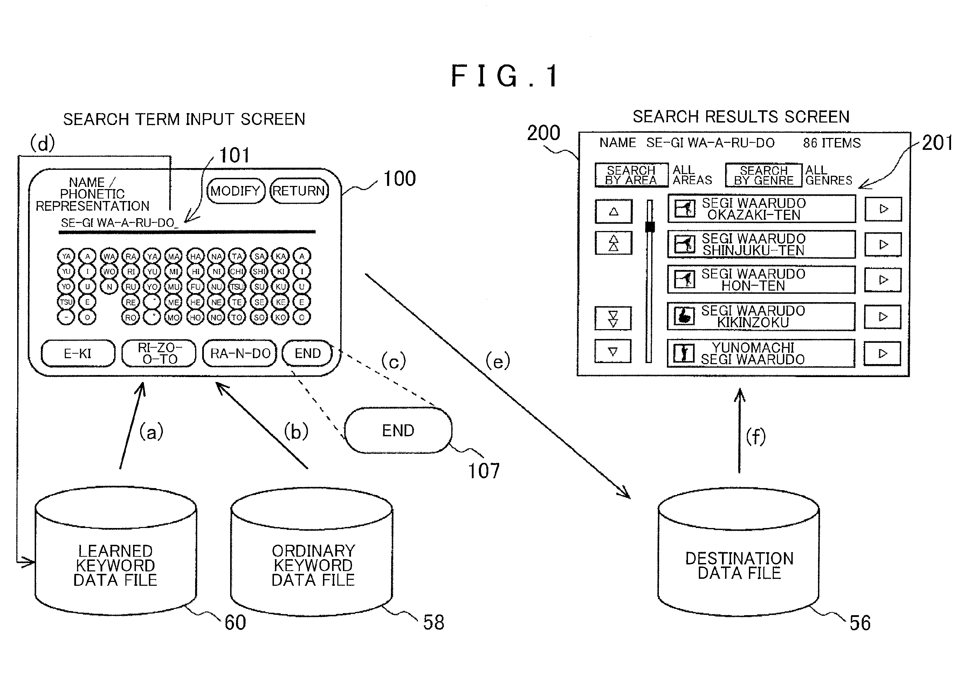

First, a system in which a navigation device provides support for narrowing down destination candidates will be explained using FIG. 1.
The navigation device provides support for setting the search term by using a learned keyword data file 60, an ordinary keyword data file 58, and the like to configure a search term input screen 100. The navigation device lets the user select a destination that matches the search term by configuring a search results screen 200 using a destination data file 56.
Processing to provide the support is carried out in the order indicated by the lowercase English letters in parentheses in FIG. 1.

First, the navigation device displays the search term input screen 100, accepts user input from a group of character buttons and from keyword buttons, and sets the search term in a search term setting space 101.
The group of the character buttons makes it possible to input individual characters such as "a", "i", and the like. The keyword buttons make it possible to input a continuous character string, such as "e-ki", "ri-zo-o-to", and the like, that it is thought that the user will input.

(a) Using the characters that have been inputted in the search term setting space 101, the navigation device searches in the learned keyword data file 60 for the keywords that will be displayed on the keyword buttons and displays them on the keyword buttons.
(b) Next, the navigation device searches for the keywords in the ordinary keyword data file 58 in the same manner and displays them on the keyword buttons.

The learned keyword data file 60 stores, in a form that has been converted into keywords, search terms that the user has inputted in the past. The ordinary keyword data file 58 stores keywords that have been established in advance.
In displaying the keyword buttons, the navigation device gives priority to the learned keyword data file 60 over the ordinary keyword data file 58, as in (a) and (b) above.

(c) The navigation device monitors whether an End button 107 has been selected and recognizes that it has been selected when the user touches the End button 107.
(d) When the End button 107 is selected, the navigation device sets the search term that has been inputted in the search term setting space 101 and establishes it as a new learned keyword by storing it in the learned keyword data file 60.
   Note that the keyword button displays are in units of seven characters, so the navigation device stores the set search term in the learned keyword data file 60 after segmenting it into seven-character units.

(e) In addition to storing the search term in the learned keyword data file 60, the navigation device searches for the search term in the destination data file 56 and displays in a search results display space 201 of the search results screen 200 location names (facility names) for the location information items that match the search term. The location information items that correspond to the search term are stored in the destination data file 56.
Next, when the user selects one of the location names that are displayed in the search results display space 201, the navigation device sets the location as the destination.

Note that in the example described above, the narrowing down of the location information items in the destination data file 56 starts after the user selects the End button 107, but the navigation device can also increase the speed of the narrowing down processing by narrowing down the location information items in parallel with the process by which the user inputs the search term in the search term setting space 101.

Thus, while using the learned keyword data file 60 and the ordinary keyword data file 58 to support the user's search term input, the navigation device also searches for the location information and, by adding to the learned keyword data file 60 the search terms that the user has inputted, learns the search terms that the user has inputted.

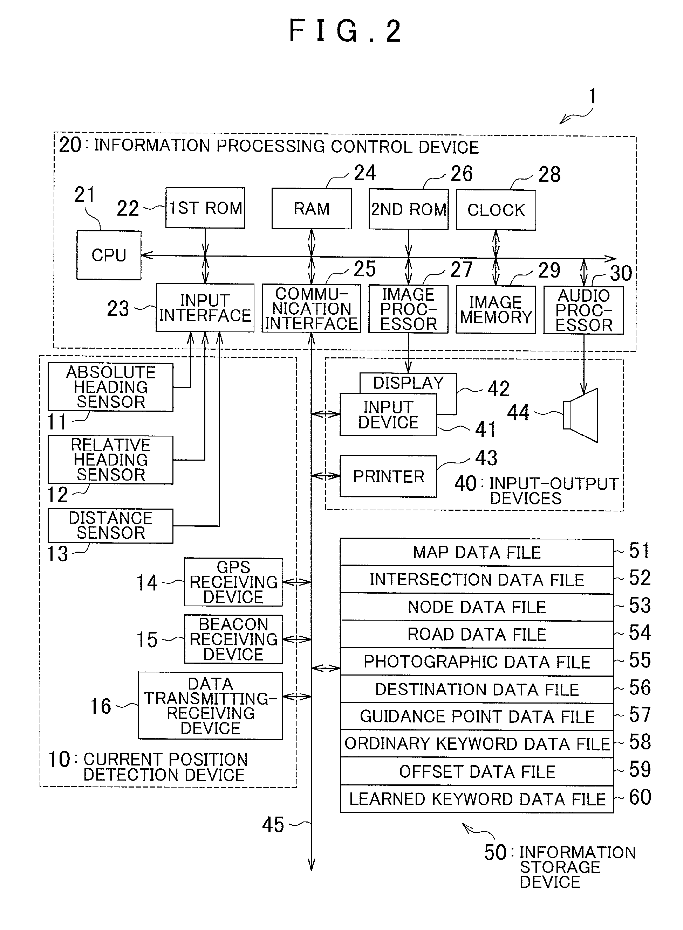

FIG. 2 is a system configuration diagram of a navigation device 1 in which the present embodiment is used.
The navigation device 1 is installed in a vehicle and, as shown in FIG. 2, it includes a current position detection device 10, an information processing control device 20, input-output devices 40, and an information storage device 50.
First, the current position detection device 10 has a configuration as described herewith. An absolute heading sensor 11 is a geomagnetic sensor that detects the direction in which the vehicle is facing, by using a magnet to detect the direction north, for example. The absolute heading sensor 11 may be any unit that detects an absolute heading.

A relative heading sensor 12 is a sensor that detects, for example, whether or not the vehicle has turned at an intersection. It may be an optical rotation sensor that is attached to a rotating portion of the steering wheel, a rotating type of resistance volume, or an angle sensor that is attached to a wheel portion of the vehicle.
A gyroscopic sensor that utilizes angular velocity to detect a change in an angle may also be used. In other words, the relative heading sensor 12 may be any unit that can detect an angle that changes in relation to a reference angle (the absolute heading).
A distance sensor 13 may be, for example, a unit that detects and measures a rotation of a wheel or a unit that detects an acceleration and derives its second integral. In other words, the distance sensor 13 may be any unit that can measure a distance that the vehicle moves.

A Global Positioning System (GPS) receiving device 14 is a device that receives a signal from a man-made satellite. It can acquire various types of information, such as a signal transmission time, information on the position of the receiving device 14, a movement velocity of the receiving device 14, a direction of movement of the receiving device 14, and the like.
A beacon receiving device 15 is a device that receives a signal that is transmitted from a transmission device that is installed at a specific location. Specifically, the beacon receiving device 15 can obtain information that pertains to the vehicle's operation, such as VICS information, information on traffic congestion, information on the vehicle's current position, parking information, and the like.

A data transmitting-receiving device 16 is a device that utilizes a telephone circuit or radio waves to perform communication and exchange information with other devices outside the vehicle.
For example, the data transmitting-receiving device 16 may be used in a variety of ways, such as for a car telephone, ATIS, VICS, GPS correction, inter-vehicle communication, and the like, and is capable of inputting and outputting information that relates to the operation of the vehicle.

The vehicle is also provided with a vehicle speed sensor that measures the vehicle's speed, an acceleration sensor that measures acceleration, an accelerator sensor that measures the extent to which the accelerator pedal is depressed, a brake sensor that measures the extent to which the brake pedal is depressed, and the like, although these are not shown in the drawings.

The information processing control device 20 is a unit that performs calculations and control based on information that is inputted from the current position detection device 10 and the input-output devices 40, as well as on information that is stored in the information storage device 50. The information processing control device 20 is also a unit that performs control such that calculation results are output to an output unit such as a display 42, a printer 43, a speaker 44, or the like.

The information processing control device 20 has the configuration that is described below.
A central processing unit (CPU) 21 performs overall calculations and control for the entire navigation device 1.
In the present embodiment, the CPU 21 learns the keywords that the user inputs and deletes the learned keywords in conjunction with the deletion of the location information.
A first ROM 22 stores programs that are related to navigation, specifically navigation programs that are related to current position detection, route searching, displayed guidance, and the like.
Operating in accordance with the programs that are related to navigation makes it possible for the CPU 21 to perform learned keyword deletion processing.

An input interface 23 is a unit that receives information from the current position detection device 10.
A RAM 24 provides working memory for the information processing that the CPU 21 performs, storing data that the CPU 21 uses to display various types of screens, output values for the various types of sensors, information that the user has inputted, and the like, for example.
More specifically, the RAM 24 stores information that the user inputs, such as destination information, information on a point that the vehicle passes, and the like that are inputted from an input device 41 that is described later. The RAM 24 is also a storage unit for storing the results of calculations that the CPU 21 makes based on the information that is inputted by the user, route search results, and map information that is read in from the information storage device 50.
A communication interface 25 is a unit for inputting and outputting information from the current position detection device 10, particularly information that is acquired from outside the vehicle.

A second ROM 26 stores programs that are related to navigation, specifically a navigation program that is related to voice guidance. Note that the first ROM 22 and the second ROM 26 may also be configured from a single common ROM.
An image processor 27 is a processing unit that takes vector information that is processed by the CPU 21 and processes it into image information.

### A clock 28 keeps time.

An image memory 29 is a unit that stores the image information that the image processor 27 processes.
An audio processor 30 processes audio information that is read in from the information storage device 50 and outputs it to the speaker 44.

The input-output devices 40 include the input device 41, the display 42, the printer 43, and the speaker 44. The user uses the input device 41 to input data such as a destination, a point that the vehicle passes, a search condition, and the like. The display 42 displays an image. The printer 43 prints information. The speaker 44 outputs the audio information. The input device 41 may be configured from a touch panel, a touch switch, a joystick, a key switch, or the like, for example.
A map of the area around the current position and a driving route to the destination are displayed on the display 42.

The information storage device 50 is connected to the information processing control device 20 through a transmission path 45.
The information storage device 50 stores a map data file 51, an intersection data file 52, a node data file 53, a road data file 54, a photographic data file 55, the destination data file 56, a guidance point data file 57, the ordinary keyword data file 58, an offset data file 59, the learned keyword data file 60, and other data files that are not shown in the drawings.

The information storage device 50 is generally configured from an optical storage medium such as a DVD-ROM or a CD-ROM, or from a magnetic storage medium such as a hard disk or the like, but it may also be configured from any one of various types of storage media, such as a magneto optical disk, a semiconductor memory, or the like.
Note that for information that must be overwritten, the information storage device 50 may be configured from an overwriteable hard disk, flash memory, or the like, and for other, fixed information, a ROM such as a CD-ROM, a DVD-ROM, or the like may be used for the information storage device 50.

The map data file 51 stores map data such as a national road map, road maps of various regions, residential maps, and the like. The road maps include various types of roads, such as main arterial roads, expressways, secondary roads, and the like, as well as terrestrial landmarks (facilities and the like). The residential maps include graphics that show the shapes of terrestrial structures and the like, as well as street maps that indicate street names and the like. The secondary roads are comparatively narrow roads with rights of way that are narrower than the prescribed values for national routes and prefectural routes. They include roads for which traffic restriction information is added, such as "one-way" and the like.

The intersection data file 52 stores data that is related to intersections, such as geographical coordinates for the locations of intersections, intersection names, and the like. The node data file 53 stores geographical coordinate data and the like for each node that is used for route searching on the map. The road data file 54 stores data that is related to roads, such as the locations of roads, the types of roads, the number of lanes, the connection relationships between individual roads, and the like. The photographic data file 55 stores image data of photographs taken of locations that require visual display, such as various types of facilities, tourist areas, major intersections, and the like.

The destination data file 56 stores data such as the locations, names, and the like of places, facilities, and the like that are highly likely to become destinations, such as major tourist areas and buildings, companies, sales offices, and the like that are listed in telephone directories, and the like.
The guidance point data file 57 stores guidance data on geographical points where guidance is required, such as the content of a guidance display sign that is installed on a road, guidance for a branching point, and the like.

The keywords that are displayed on the keyword buttons are stored in the ordinary keyword data file 58.
Keywords that are selected from the ordinary keyword data file 58 are stored in the offset data file 59, as are offset keywords for displaying on the keyword buttons the seven-character units that follow the initial seven-character units of the keywords.
The learned keywords that are the user-defined search terms that have been learned are stored in the learned keyword data file 60.
The other data files that are not shown in the drawings are also stored in the information storage device 50.

In the navigation device 1 that is configured in this manner, route guidance is performed as described below.
The navigation device 1 detects the current position using the current position detection device 10, then reads map information for the area surrounding the current position from the map data file 51 in the information storage device 50 and displays the map information on the display 42.
The navigation device 1 then displays the search term input screen 100, the search results screen 200, or the like on the display 42 and accepts input of a destination from the input device 41.
The input device 41 is provided with a touch panel that is disposed on the display 42, and when the user touches an operation button that is displayed on the display 42, the input device 41 detects the selecting of the operation button and accepts the setting of the destination by the user.

Then, when the destination has been inputted from the input device 41, the information processing control device 20 searches for (computes) a plurality of candidates for a route from the current position to the destination and displays the candidates on the map that is displayed on the display 42. When the driver selects one of the routes, the information processing control device 20 (a route acquisition unit) acquires the route by storing the selected route in the RAM 24.

Note that the information processing control device 20 may also acquire the route by transmitting the current position of the vehicle (or a departure point that is inputted) and the destination to an information processing center and receiving a route to the destination that has been found by the information processing center. In this case, the communication of the destination and the route is accomplished by wireless communication through the communication interface 25.
The user may also search for the route from the departure point to the destination by using an information processing device such as a personal computer or the like at home or elsewhere, then store the chosen route in a storage medium such as a USB memory or the like. The navigation device 1 may then acquire the route through a device that reads it from the storage medium. In this case, the device that reads the route from the storage medium is connected to the information processing control device 20 through the transmission path 45.

When the vehicle is in motion, the route guidance is performed by tracking the current position that is detected by the current position detection device 10.
The route guidance specifies the vehicle's current position on the map by using map matching between the road data that corresponds to the chosen route and the current position that is detected by the current position detection device 10, then displays the chosen route and the current position on the map of the area surrounding the current position of the vehicle, which is displayed on the display 42.
Based on the relationship between the chosen route and the current position, the information processing control device 20 determines whether or not guidance is necessary. Specifically, in a case where the vehicle will continue to drive straight ahead for at least a specified distance, the information processing control device 20 determines whether or not route guidance and direction guidance are necessary for a specified road change point or the like. If guidance is necessary, the guidance is displayed on the display 42 and also provided by voice.

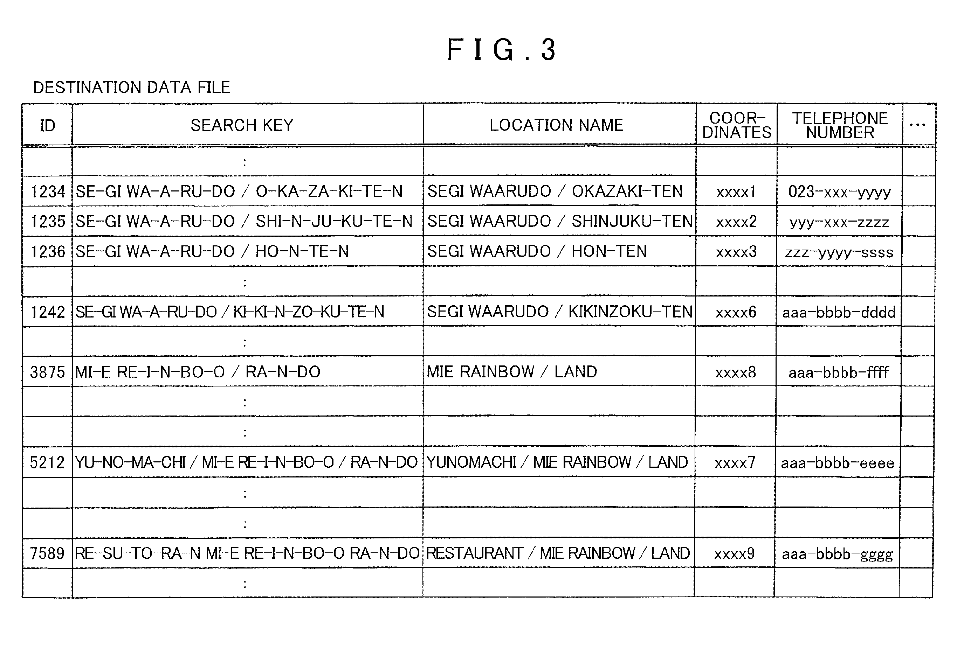

FIG. 3 is a figure that shows an example of a logical configuration of the destination data file 56.
The destination data file 56 is a data base that stores the location information items that pertain to locations that are objects of the route search, and it is configured from data items such as an ID, a search key, a location name, coordinates, a telephone number, and the like.

The ID data item is unique identification information that is appended to each of the location information items.
The search key data item stores a search key that expresses the location name phonetically, with the phonetic representation segmented into semantic units, such as "se-gi wa-a-ru-do / o-ka-za-ki-te-n" or the like, for example. Note that the boundary between the semantic units is expressed by a forward slash in this example.
The search key is used as a key for searching for the search term that the user has inputted on the search term input screen 100, and the search term can be found by matching it to the semantic units, for example.

For example, in a case where the search term is "se-gi wa-a-ru-do", the navigation device 1 finds the search key "se-gi wa-a-ru-do / o-ka-za-ki-te-n" by matching the search term to the first semantic unit, and also finds the search key "yu-no-ma-chi / se-gi wa-a-ru-do" by matching the search term to the second semantic unit.
The navigation device 1 can identify the location information items that correspond to the search term by using the search term to find the search keys.

Thus the search keys function as search object terms that are used in searching for the location information items according to the search term.
Therefore, in the destination data file 56, each of the location information items pertains to a search object (facility) and includes the search object term, and the information storage device 50 functions as a location information storage unit that stores the location information items.

Note that the navigation device 1 can also be configured such that the search keys "se-gi wa-a-ru-do / o-ka-za-ki-te-n", "yu-no-ma-chi / se-gi wa-a-ru-do" (not shown in the drawings), and the like will be found for the search term "se-gi-wa" by matching to the beginning of any one of the semantic units.
The navigation device 1 can also be configured such that it finds the search keys that contain a character string that corresponds to the search term, instead of matching to the semantic units. In that case, where the search term is "se-gi-wa", for example, the search key "i-se-gi-wa-ka-ya-ma" (not shown in the drawings) can be found, because it contains the character string "se-gi-wa".

The coordinates data item contains the latitude and the longitude of the location where the facility to which the location information item pertains exists. Note that the coordinates data item may also be used for information other than the latitude and the longitude, as long as the information makes it possible to identify the location.
The telephone number data item contains the telephone number of the facility to which the location information item pertains.
The destination data file 56 may also be configured such that it also stores the address of the facility to which the location information item pertains, area information such as "Kanto region", for example, genre information such as "restaurant", and the like.

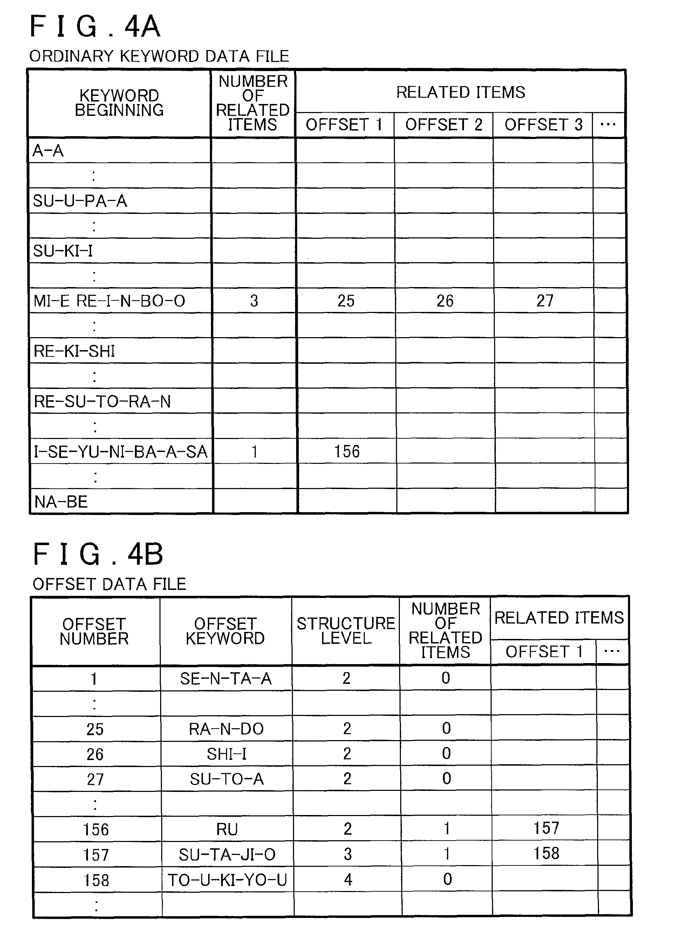

FIG. 4A is a figure that shows an example of a logical configuration of the ordinary keyword data file 58.
Each of the ordinary keywords is segmented according to the semantic units into character strings of no more than seven characters (because the maximum number of characters on each of the keyword buttons is seven characters). Here, the first segment is called the keyword beginning, and the segments that follow are called the offset keywords.

The ordinary keyword data file 58 is configured from various data items, such as the keyword beginning, the number of related items, the related items, and the like.
The keyword beginning data item is a character string that corresponds to the first segment of the ordinary keyword.
The number of related items data item contains the number of the offset keywords that follow the keyword beginning.
For example, there are three offset keywords, "ra-n-do", "shi-i", and "su-to-a", that follow the keyword beginning "mi-e re-i-n-bo-o", so the number of related items for the keyword beginning "mi-e re-i-n-bo-o" is three.

The related items data item is formed from sub-items that are called offset 1, offset 2, and the like in correspondence to the successive offset keywords and that contain offset numbers that respectively correspond to the offset keywords, which are described later.
The sub-items function as addresses for the offset keywords in the offset data file 59.

For example, offset 1 to offset 3 exist for the keyword beginning "mi-e re-in-bo-o", and they respectively contain the offset numbers 25 to 27.
In the offset data file 59, the offset keywords with the offset numbers 25 to 27 are respectively "ra-n-do", "shi-i", and "su-to-a". Combining the keyword beginning with the offset keywords forms the keywords "mi-e re-i-n-bo-o ra-n-do", "mi-e re-i-n-bo-o shi-i", and "mi-e re-i-n-bo-o su-to-a".

Thus the keyword beginning and the offset keywords are linked by the related items data item, so in a case where the user uses one of the keyword buttons to select "mi-e re-i-n-bo-o", for example, "ra-n-do", "shi-i", and "su-to-a" can be displayed on the next three keyword buttons.

FIG. 4B is a figure that shows an example of a logical configuration of the offset data file 59.
The character strings that follow the keyword beginning are stored in the offset data file 59.
An offset number data item contains the offset number for the offset keyword.
An offset keyword data item contains, in the form of a character string of no more than seven characters, the offset keyword that follows the keyword beginning.

A structure level data item indicates an ordinal number for the offset keyword, starting counting from the keyword beginning.
For example, for the keyword "i-se yu-ni-ba-a-sa-ru su-ta-ji-o to-u-ki-yo-u", the keyword beginning is "i-se yu-ni-ba-a-sa", and the offset keywords are set as "ru", "su-ta-ji-o", and "to-u-ki-yo-u" to make the semantic segmenting easy to understand. The offset keyword "ru" is second, starting counting from the keyword beginning, and "su-ta-ji-o" is third.

A number of related items data item contains the number of the offset keywords that follow the offset keyword in the offset keyword data item.
For example, for the offset keyword "ra-n-do" for the keyword "mi-e re-i-n-bo-o ran-do", the number of the offset keywords that follow it is zero. For the offset keyword "ru" for the keyword "i-se yu-ni-ba-a-sa-ru su-ta-ji-o to-u-ki-yo-u", the following offset keyword "su-ta-ji-o" exists, so the number of the offset keywords that follow it is one.

In a case where there exist offset keywords that follow the offset keyword in the offset keyword data item, a related items data item contains the offset numbers for the offset keywords that follow.
For example, after "ru", with the offset number 156, comes "su-ta-ji-o", with the offset number 157, and after "su-ta-ji-o" comes "to-u-ki-yo-u", with the offset number 158.
Therefore, if the keyword beginning "i-se yu-ni-ba-a-sa" is selected, the offset keywords as "ru", "su-ta-ji-o", and "to-u-ki-yo-u" are acquired, and the keyword "i-se yu-ni-ba-a-sa-ru su-ta-ji-o to-u-ki-yo-u" is formed.

Note that an ID for the corresponding location information item can be associated with the ordinary keyword, although this is not shown in the drawings, and the ID can be used to increase the speed of the narrowing down of the location information items and to manage the ordinary keywords in conjunction with changes to the location information items.

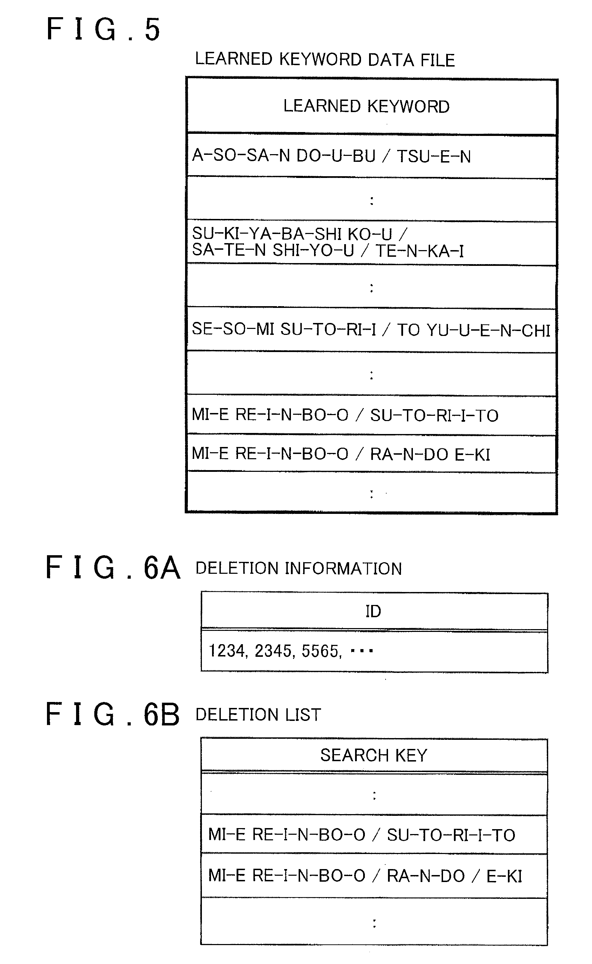

FIG. 5 is a figure that shows an example of a logical configuration of the learned keyword data file 60.
In a case where the user has inputted a new search term on the search term input screen 100, the learned keyword data file 60 is where the navigation device 1 stores the search term as one of the learned keywords.

For example, in a case where three hundred learned keywords can be stored in the learned keyword data file 60 and the number of inputs exceeds three hundred, the navigation device 1 may store the newest learned keyword by overwriting the oldest learned keyword. The navigation device 1 may also overwrite the learned keyword that is least frequently used.

When storing one of the learned keywords in the learned keyword data file 60, the navigation device 1 segments the keyword into seven-character units, starting at the beginning, matching the units to the maximum number of characters on any one of the keyword buttons.
For example, in a case where the learned keyword is "su-ki-ya-ba-shi ko-u-sa-te-n shi-yo-u-te-n-ka-i", the navigation device 1 segments it into "su-ki-ya-ba-shi ko-u / sa-te-n shi-yo-u / te-n-ka-i".
Having done this, the navigation device 1 displays "su-ki-ya-ba-shi ko-u" on one of the keyword buttons, and if the user selects it, the navigation device 1 can display "sa-te-n shi-yo-u" on the next keyword button.

Note that if the keyword is simply segmented into seven-character units, it will be difficult to understand in some cases, so in a case where the first character in a character string after segmenting is one of "n", the subscripted form of "tsu", and the symbol for an extended vowel, the segments are shortened to six characters to prevent these characters from being positioned at the beginning of a segment.
In that case, in a case where the character string is segmented into "a-sa-ku-sa ni-shini / tsu-po-ri" (not shown in the drawings), the second segment starts with the subscripted form of "tsu", so the character string is segmented into six-character units to yield "a-sa-ku-sa ni-shi / ni-tsu-po-ri".

FIG. 6A is a figure that shows an example of a logical configuration of deletion information.
The deletion information is tirelessly transmitted from a specified server to the navigation device 1 through a mobile telephone circuit, an Internet circuit, or the like, and is received by the data transmitting-receiving device 16 (FIG. 2).
Note that the deletion information may also be stored in a storage medium that may be connected to an interface of the navigation device 1 such that the deletion information can be read.
The deletion information includes the IDs of the location information items to be deleted. The navigation device 1 uses the IDs in deleting the location information items.

FIG. 6B is a figure that shows an example of a logical configuration of a deletion list.
Hereinafter, four examples of deleting of the learned keywords from the learned keyword data file 60 will be explained, but in the first of the examples, the deletion list is created based on the deletion information and is used in the deleting of the learned keywords. The deletion list in FIG. 6B is used in this case.
The navigation device 1 creates the deletion list by extracting the search keys from the location information items that are specified in the deletion information.

Next, the search term input screen 100 will be explained.

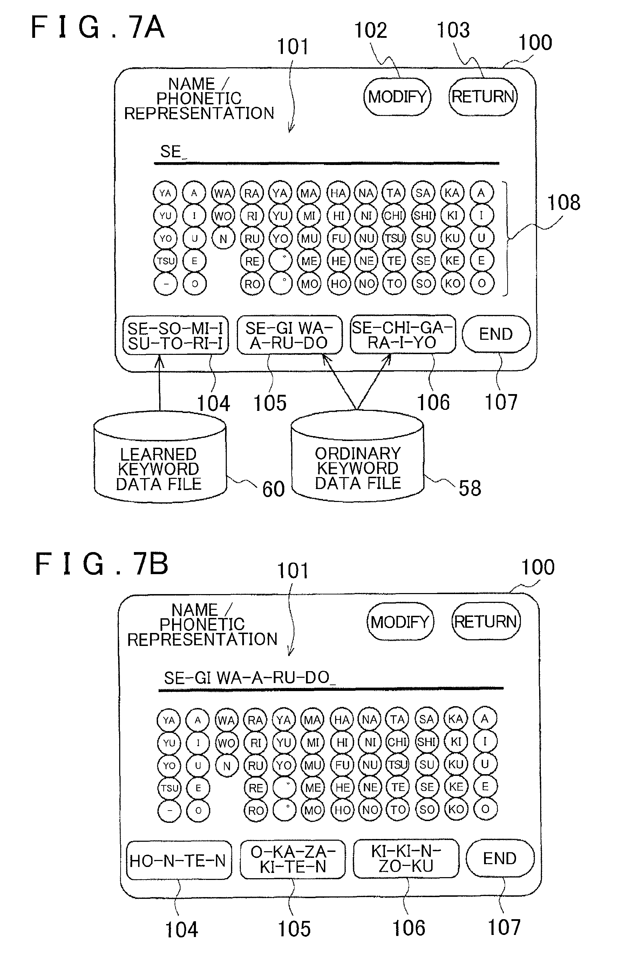

FIG. 7A shows an illustrative example of a form of the search term input screen 100 that is displayed on the display 42.
A touch panel that serves as the input device 41 (FIG. 2) is provided on the face of the display 42. When the user makes a selection by touching a button or the like that is displayed on the display 42, information that corresponds to the touched button can be inputted to the navigation device 1.

The search term input screen 100 is configured from the search term setting space 101, a Modify button 102, a Return button 103, character buttons 108, the keyword buttons 104 to 106, and the End button 107.
The search term setting space 101 is a space that displays the search term that the user has inputted, and to prompt further input, it also displays an underscore character after the characters (kana) that have already been inputted.

The Modify button 102 is a button that modifies the input in the search term setting space 101, and if the search term setting space 101 is selected, for example, the navigation device 1 deletes the search term that is displayed in the search term setting space 101.
The Return button 103 is a button that returns the display to the screen that was displayed before the shift to the search term input screen 100.
The character buttons 108 are buttons for inputting the characters, symbols, and diacritical marks of the Japanese syllabary, and the navigation device 1 displays the characters that the user has selected in the search term setting space 101.

The keyword buttons 104 to 106 are the buttons for inputting the ordinary keywords and the learned keywords in the search term setting space 101.
Each of the keyword buttons 104 to 106 can display a maximum of seven characters.
When a character is inputted in the search term setting space 101, the navigation device 1 displays the corresponding keywords in the keyword buttons 104 to 106.

For example, if the user inputs "se" in the search term setting space 101, the navigation device 1 searches in the learned keyword data file 60 and the ordinary keyword data file 58 for the keywords that have "se" as the first character, then displays those keywords in the keyword buttons 104 to 106.
In this process, the navigation device 1 gives priority to the learned keyword data file 60 over the ordinary keyword data file 58 and displays the keywords in the keyword buttons 104 to 106 in the prioritized order in which it finds them.

In the example in FIG. 7A, for the character "se" that the user has inputted in the search term setting space 101, the navigation device 1 first finds the learned keyword "se-so-mi su-to-ri-i" in the learned keyword data file 60, then finds the ordinary keywords "se-gi wa-a-ru-do" and "se-chi-ga-ra-i-yo". The navigation device 1 displays the three keywords in the keyword buttons 104 to 106.

The End button 107 is a button for setting the search term that has been inputted in the search term setting space 101.
When the user inputs the search term in the search term setting space 101 using the character buttons 108 or the keyword buttons 104 to 106, the navigation device 1 takes the character string that has been inputted as the search term and holds (or stores) it in a storage medium such as the RAM 24 (FIG. 2) or the like. When the End button 107 is selected, the held (or stored) character string is set as the search term.

When the End button 107 is selected, the navigation device 1 searches in the destination data file 56 for the search term that has been inputted in the search term setting space 101 and also segments the search term into the seven-character units and stores it in the learned keyword data file 60.
Note that the navigation device 1 may also be configured such that the search of the destination data file 56 is performed every time a search term character is inputted in the search term setting space 101, even before the End button 107 is selected, such that the location information items in the destination data file 56 are narrowed down in parallel with the inputs.

FIG. 7B is the search term input screen 100 that is displayed in a case where the user has selected "se-gi wa-a-ru-do" in the keyword button 105 on the search term input screen 100 in FIG. 7A.
When the user selects "se-gi wa-a-ru-do" in the keyword button 105 in response to the character "se" that has been inputted in the search term setting space 101, the navigation device 1 replaces the character "se" with the keyword "se-gi wa-a-ru-do".
It is therefore possible for the user to input the character string "se-gi wa-a-ru-do" with a single selection operation.

Once the user selects the keyword button 105, the navigation device 1 displays in the keyword buttons 104 to 106 the offset keywords "ho-n-te-n", "o-ka-za-ki-ten", and "ki-ki-n-zo-ku" that follow "se-gi wa-a-ru-do".
Note that if the learned keyword "se-so-mi su-to-ri-i" is selected, the navigation device 1 displays the offset keyword "to" that follows it in one of the keyword buttons.

Thus, in a case where one of the ordinary keywords has been selected by one of the keyword buttons, the navigation device 1 displays in the keyword buttons the offset keywords that follow the ordinary keyword, and in a case where one of the learned keywords is selected, the navigation device 1 displays in the keyword buttons the character strings for the segments that follow the learned keyword.

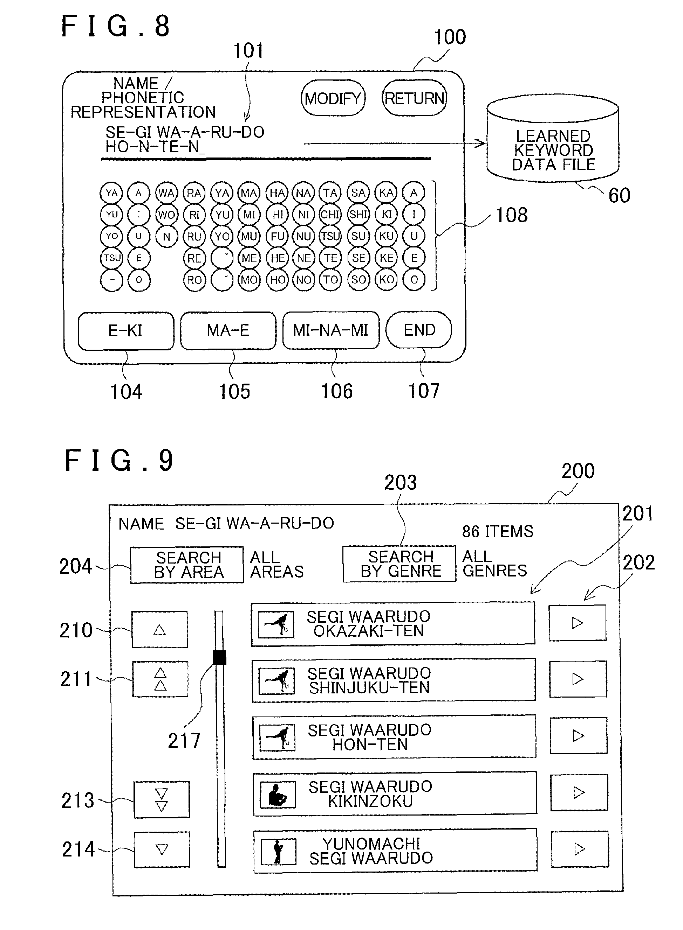

FIG. 8 is the search term input screen 100 that is displayed in a case where the user has selected "ho-n-te-n" in the keyword button 104 on the search term input screen 100 in FIG. 7B.
In the search term setting space 101, the keyword input "ho-n-te-n" has been appended to the "se-gi wa-a-ru-do" that was inputted previously, such that "se-gi wa-a-ru-do ho-n-te-n" is inputted.
The offset keywords "e-ki", "ma-e", and "mi-na-mi" that follow "ho-n-te-n" are displayed in the keyword buttons 104 to 106.

If the user selects the End button 107 with the screen in this state, the navigation device 1 sets "se-gi wa-a-ru-do ho-n-te-n" as the search term and searches for the term in the location information. The navigation device 1 also segments the character string "se-gi wa-a-ru-do ho-n-te-n" into seven-character units to create "se-gi wa-a-ru-do ho / n-te-n", but because the second segment starts with "n", the navigation device 1 changes the keyword to "se-gi wa-a-ru-do / ho-n-te-n" and stores it in the learned keyword data file 60.
In this manner, the navigation device 1 can learn the search terms that the user has inputted.

FIG. 9 is a figure that shows an example of the search results screen 200, showing the results that are found by searching when "se-gi wa-a-ru-do" has been inputted on the search term input screen 100.
Search results display spaces 201 are spaces for displaying the location names that are found, as a list in the form of location name buttons.
In the example in FIG. 9, five candidates can be displayed at one time, and the location name buttons are displayed for the top five candidates that have been found, "Segi Waarudo Okazaki-ten", "Segi Waarudo Shinjuku-ten", and the like, in the order in which they were found. Icons are also set in the location name buttons such that the nature of the facilities will be instinctively understood.

At this point, if the user selects "Segi Waarudo Okazaki-ten", the navigation device 1 searches in the information storage device 50 for information such as the coordinate values and the like that pertain to "Segi Waarudo Okazaki-ten", then sets the information for the destination. The navigation device 1 then guides the vehicle to the destination "Segi Waarudo Okazaki-ten" using the current position detection device 10 and the like.

An Area button 204 is a button for using an area to narrow down the location names that are displayed in the search results display space 201. In FIG. 9, it is set to all areas.
A Genre button 203 is a button for using a genre to narrow down the location names that are displayed in the search results display space 201. In FIG. 9, it is set to all genres.

A Details button 202 is displayed for each of the location names. If the user touches the Details button 202 for the desired location name, the navigation device 1 searches for the location information that corresponds to the location name and displays it on the display 42.
A Previous button 210 and a Next button 214 are buttons that respectively scroll up and scroll down the location names in the search results display space 201, one location name at a time.

A Previous Page button 211 and a Next Page button 213 are buttons that respectively scroll up and scroll down the location names in the search results display space 201, one page at a time.
A scroll bar 217 indicates the position of the currently displayed results among all of the search results. The display can be scrolled up and scrolled down by clicking and dragging on the scroll bar 217.

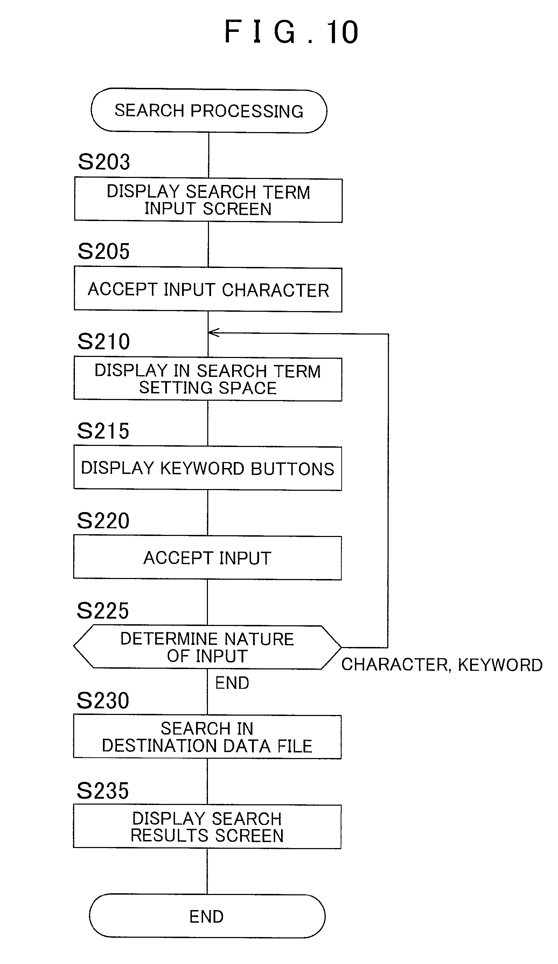

Next, a procedure for the search processing that the navigation device 1 performs will be explained using the flowchart in FIG. 10.
The processing that is described below is performed in accordance with a specified program by the CPU 21 (FIG. 2) that is provided in the navigation device 1.
Note that in the explanation that follows, the RAM 24 is used as a storage medium, but a different storage medium may also be used.

First, the CPU 21 creates screen data for displaying the search term input screen 100 (FIG. 7), storing it in the RAM 24 and using it to display the search term input screen 100 on the display 42 (step 203).

Next, by detecting positions that the user has touched on the input device 41 (the touch panel), the CPU 21 identifies the characters that the user has selected using the character buttons 108, accepts the inputted characters as the search term, and holds it by storing it in the RAM 24 (step 205).
Thus the navigation device 1 is provided with a character input unit that accepts character inputted.
Next, the CPU 21 displays in the search term setting space 101 the characters that are held in the RAM 24 (step 210).

Next, the CPU 21 searches in the learned keyword data file 60 for the learned keywords that correspond to the characters that the user selected, and also searches in the ordinary keyword data file 58 for the ordinary keywords that correspond to the selected characters.
The CPU 21 takes the keywords it finds and stores them in the RAM 24.

Next, the CPU 21 takes the keywords that are stored in the RAM 24 and ranks them according to a specified algorithm such that the learned keywords are ranked higher than the ordinary keywords. The CPU 21 displays the highest-ranking keyword in the keyword button 104, then displays the second-ranking and third-ranking keywords in the keyword button 105 and the keyword button 106, respectively (step 215).
Thus the navigation device 1 is provided with a keyword display unit that extracts and displays the keywords that are related to the characters that are inputted.

After displaying the keyword buttons 104 to 106, the CPU 21 monitors the inputs to the input device 41, and if the user touches the touch panel, the CPU 21 accepts the input (step 220).
When the CPU 21 accepts the input from the user, it determines the nature of the input (step 225).

In a case where it is determined in the determination processing that a character was inputted from one of the character buttons 108 or that a keyword was inputted from one of the keyword buttons 104 to 106 (Character or Keyword at step 225), the CPU 21 uses the one of the character and the keyword that was inputted to update the search term (the character string) that is held in the RAM 24, then displays the updated search term in the search term setting space 101 (step 210). Then the CPU 21 performs the processing that starts at step 215.
Thus the navigation device 1 is provided with a keyword selection unit that accepts the selection of the displayed keyword and with a holding unit that holds the accepted characters and keywords that are inputted.

On the other hand, in a case where it is determined in the determination processing that the selecting of the End button 107 was inputted (End at step 225), the CPU 21 takes the character string that is held in the RAM 24 (and that is displayed in the search term setting space 101) and sets it as the search term. The CPU 21 then uses the search term to search in the destination data file 56, storing the location information items that it finds in the RAM 24 (step 230).
Thus the navigation device 1 is provided with a setting unit that sets the held characters and keywords as the search term and with a search unit that searches through the stored location information using the set search term.

Next, the CPU 21 uses the location information that is stored in the RAM 24 to create screen data for the search results screen 200 and stores the screen data in the RAM 24.
The CPU 21 then uses the screen data that is stored in the RAM 24 to display the search results screen 200 on the display 42 (step 235).

When the character string that is held in the RAM 24 is set as the search term, the CPU 21 stores the search term as one of the learned keywords in the learned keyword data file 60, updating the learned keyword data file 60.
Thus the navigation device 1 is provided with a keyword update unit that stores the character string that makes up the set search term as a keyword in a keyword storage unit.

Next, a procedure for learned keyword deletion processing that the navigation device 1 performs will be explained.
Note that in the present embodiment, four forms of the learned keyword deletion processing will be explained.

### First Example

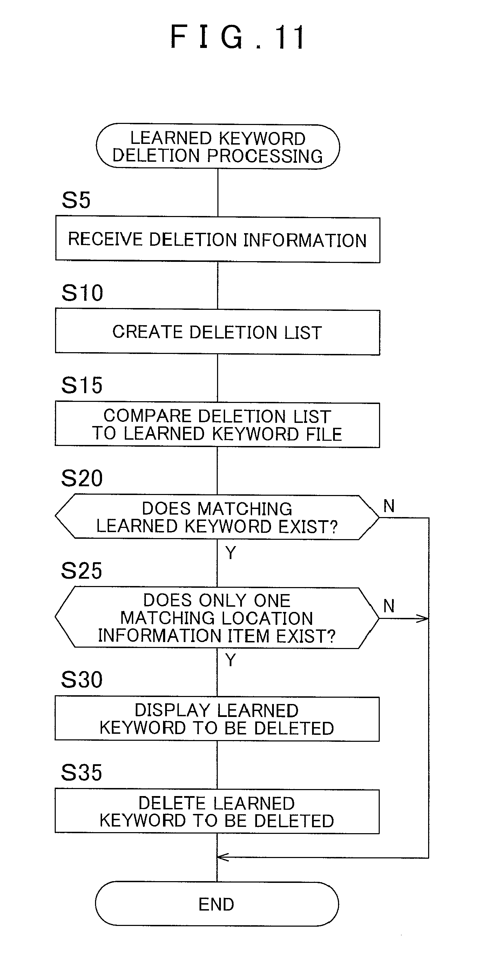

FIG. 11 is a flowchart that shows the procedure for the learned keyword deletion processing according to a first example.
First, the CPU 21 uses the data transmitting-receiving device 16 to receive the deletion information (FIG. 6A) that is transmitted from the server and stores the deletion information in the RAM 24 (step 5).
Thus the navigation device 1 is provided with a deletion information acquisition unit that acquires the deletion information that designates the location information items to be deleted.

Next, the CPU 21 uses the IDs in the deletion information to identify the location information items to be deleted from the destination data file 56, then extracts the search keys (the search object terms) from the identified location information items to create the deletion list (FIG. 6B) and sots the deletion list in the RAM 24 (step 10).

Next, the CPU 21 reads the learned keyword data file 60 and compares each of the learned keywords to the deletion list (step 15), checking whether or not the individual learned keyword is included in one of the search keys that are listed in the deletion list (step 20).
Thus the CPU 21 checks whether or not the search term that matches learned keywords when a search that uses the learned keywords is done is included in the deletion list.

Therefore, in a case where the navigation device 1 searches for the search key by matching to the semantic units, the CPU 21 checks whether or not any of the semantic units of the search key matches the learned keyword, and in a case where the navigation device 1 searches for the search key by matching to a portion of the character string, the CPU 21 checks whether or not the search keys that portion of the search key matches the learned keyword.

In a case where a matching learned keyword does not exist (N at step 20), the navigation device 1 ends the processing.
In a case where a matching learned keyword does exist (Y at step 20), the navigation device 1 identifies the matching learned keyword and stores it in the RAM 24.
Next, the CPU 21 uses the identified learned keyword to search in the destination data file 56 and check whether there is only one matching location information item or a plurality of matching location information items (step 25).

In a case where there is not only one location information item that matches the learned keyword (N at step 25), the CPU 21 ends the processing.
In a case where there is only one matching location information item that matches the learned keyword (Y at step 25), the CPU 21 identifies it and stores it in the RAM 24.

Next, the CPU 21 displays the learned keyword to be deleted that was identified at step 25 (step 30), and if the user performs a delete operation, the CPU 21 deletes the learned keyword from the learned keyword data file 60 (step 35).
The CPU 21 then deletes from the destination data file 56 the location information items that are designated by the deletion information.

Thus the navigation device 1 is provided with a keyword deletion unit that, in a case where a keyword that is stored in the keyword storage unit is included in a search object term for a location information item that is to be deleted, deletes the keyword from the keyword storage unit. The navigation device 1 is also provided with a location information deletion unit that deletes from the location information storage unit the location information items that are designated by the received deletion information.

The reason why the learned keyword is deleted when only one learned keyword is found that matches the location information item, but the learned keywords are not deleted when a plurality of the learned keywords are found will now be explained.
In a case where only the location information item "se-so-mi su-to-ri-i-to / ni-tsu-pon" is found for the learned keyword "se-so-mi su-to-ri-i-to", the learned keyword "se-so-mi su-to-ri-i-to" is deleted because the corresponding location information item is to be deleted.

On the other hand, in a case where the location information items "se-so-mi su-to-ri-i-to / ni-tsu-po-n" and "se-so-mi su-to-ri-i-to / o-o-sa-ka" are found for the learned keyword "se-so-mi su-to-ri-i-to", it is not possible to know which one is to be deleted. If it is assumed that "se-so-mi su-to-ri-i-to / ni-tsu-po-n" is to be deleted and the learned keyword "se-so-mi su-to-ri-i-to" is therefore deleted, then it will not be possible for the user to find "se-so-mi su-to-ri-i-to / o-o-sa-ka" by inputting the learned keyword "se-so-mi su-to-ri-i-to".

Note that in a case where both "se-so-mi su-to-ri-i-to / ni-tsu-po-n" and "se-so-mi su-to-ri-i-to / o-o-sa-ka" are to be deleted, both will be deleted, but the learned keyword "se-so-mi su-to-ri-i-to" will remain. In this case, after the destination data file 56 is updated, the destination data file 56 will be searched using the learned keyword, and if no matches are found, the learned keyword will be deleted.

The processing that is described above is processing that deletes the learned keyword before the location information items are deleted from the destination data file 56, but in a case where the deletion list is used to delete the learned keyword after the location information items are deleted from the destination data file 56, step 25 is changed to "Is there no matching location information item?"
In a case where there is no matching location information item (Y at step 25), the navigation device 1 deletes the learned keyword, and if a matching location information item does exist (N at step 25), the navigation device 1 does not delete the learned keyword.

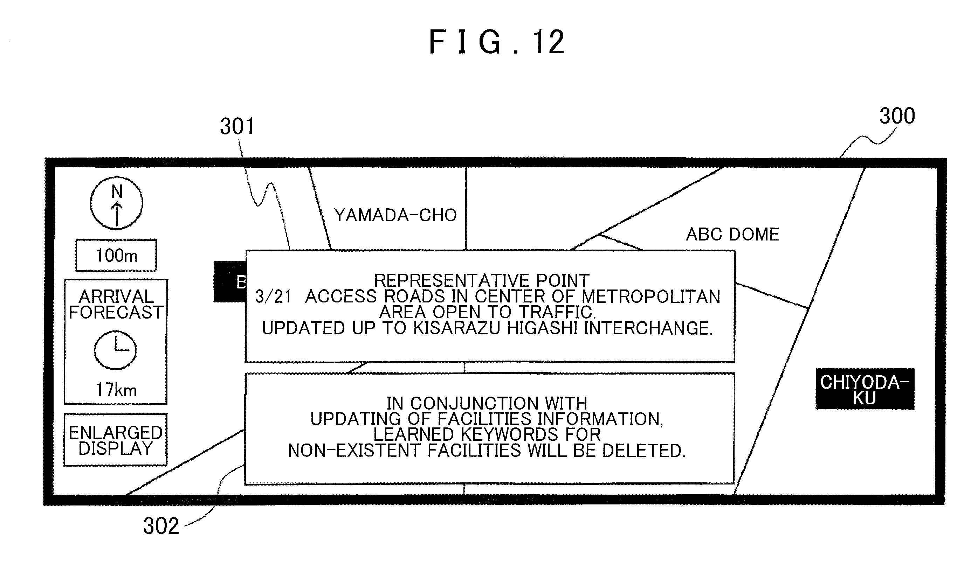

FIG. 12 is an example of a screen that the navigation device 1 displays on the display 42 at step 30.
On a guidance screen 300, a display 301 provides notice of the location information update by displaying "Representative point 3/21 Access roads in center of metropolitan area open to traffic. Updated up to Kisarazu Higashi interchange." A display 302 provides notice to the effect that the learned keywords will be deleted by displaying "In conjunction with updating of facilities information, learned keywords for non-existent facilities will be deleted."

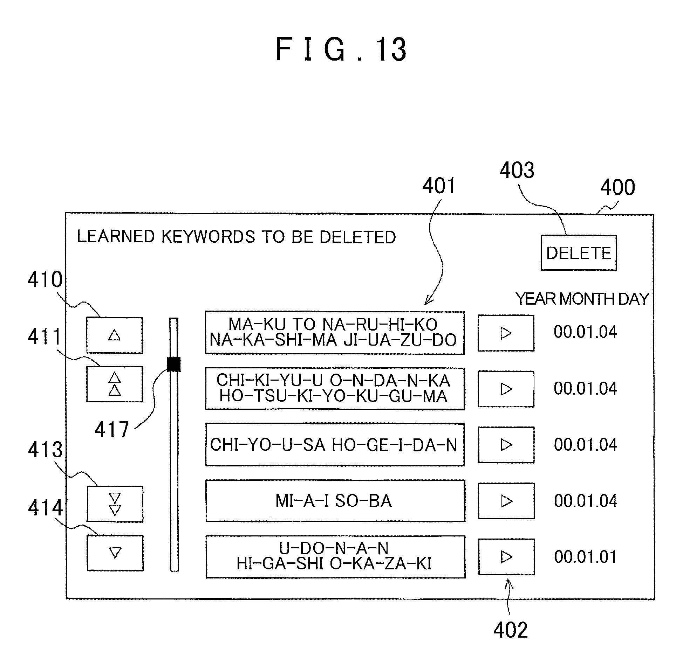

After providing these notices, the navigation device 1 displays on the display 42 a learned keyword deletion screen 400 that is shown in FIG. 13.
The learned keywords that are to be deleted are displayed in learned keywords to be deleted spaces 401.
A Delete button 403 is a button for deleting the learned keywords that are displayed in the learned keywords to be deleted spaces 401, and if the Delete button 403 is selected, the navigation device 1 executes step 35 (FIG. 11) and deletes the learned keywords.

Details buttons 402 are buttons for displaying detailed information about the learned keywords.
The functions of a Previous button 410, a Next button 414, a Previous Page button 411, a Next Page button 413, and a scroll bar 417 are respectively the same as those of the Previous button 210, the Next button 214, the Previous Page button 211, the Next Page button 213, and the scroll bar 217.

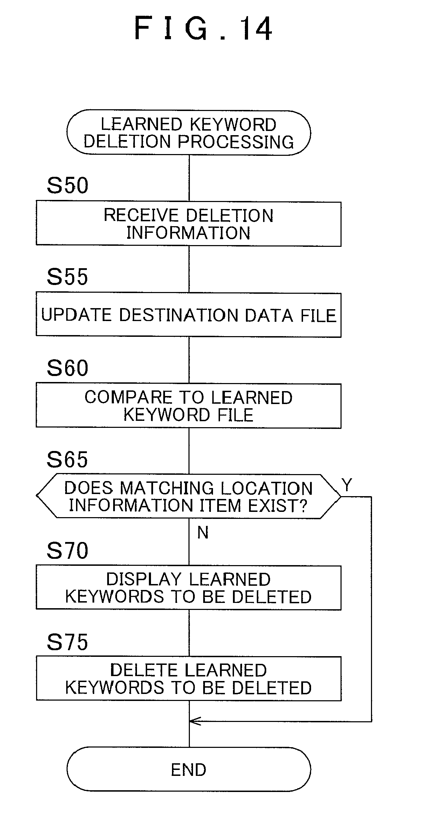

Second Example FIG. 14 is a flowchart that shows the procedure for the learned keyword deletion processing according to a second example.
First, the CPU 21 receives the deletion information and stores it in the RAM 24 (step 50).
Next, the CPU 21 updates the destination data file 56 by deleting from the destination data file 56 the location information items whose IDs are contained in the deletion information (step 55).

Note that the CPU 21 searches through the ordinary keyword data file 58 and the offset data file 59 and deletes the ordinary keywords that correspond to the deleted location information items.
In a case where there is no location information item that corresponds to the lowest-level ordinary keyword (the keyword beginning in a case where there are no offset keywords, and the lowest-level offset keyword in a case where there are offset keywords), the ordinary keyword is deleted.

For example, assume that "mi-e re-i-n-bo-o ra-n-do / na-go-ya-te-n" and "mi-e re-i-n-bo-o ra-n-do / o-o-sa-ka-te-n" exist as the ordinary keywords.
In a case where the location information item "Mie Reinboo Rando Oosaka-ten" has been deleted, if the ordinary keyword "mi-e re-i-n-bo-o ra-n-do / o-o-sa-ka-te-n" is deleted, the keyword beginning "mi-e re-i-n-bo-o ra-n-do" will be deleted, and it will become impossible to use the ordinary keyword "mi-e re-i-n-bo-o ra-n-do / na-go-ya-te-n".

Accordingly, deleting "o-o-sa-ka-te-n", which is the lowest-level keyword for "mi-e re-i-n-bo-o ra-n-do / o-o-sa-ka-te-n", and leaving the keyword beginning "mi-e re-i-n-bo-o ra-n-do" untouched makes it possible for the ordinary keyword "mi-e re-i-n-boo ra-n-do / na-go-ya-te-n" to be used.
Note that creating a link between the ID for the location information item and the lowest-level keyword for the ordinary keyword makes it possible to increase the speed of the processing.

Next, the CPU 21 compares the destination data file 56 to the learned keyword data file 60 (step 60), and in a case where a location information item has been found that matches a learned keyword, the CPU 21 determines whether or not the matching location information item exists in the destination data file 56 (step 65).
In a case where no matching location information item is found for the learned keyword (N at step 65), the CPU 21 stores the learned keyword in the RAM 24 as a keyword to be deleted, and in a case where a matching location information item is found (Y at step 65), the CPU 21 determines that the learned keyword is not to be deleted.

Next, the CPU 21 displays the learned keywords that are stored in the RAM 24 as the keywords to be deleted on the display 42 (step 70), and if the user performs the delete operation, the CPU 21 deletes the learned keyword from the learned keyword data file 60 (step 75). The displays at step 70 are the same as those in FIGS. 12 and 13.
By the process described above, the CPU 21 is able to delete the learned keywords that correspond to the location information items that have been deleted, with the exception of the learned keywords that also correspond to location information items that have not been deleted.

### Third Example

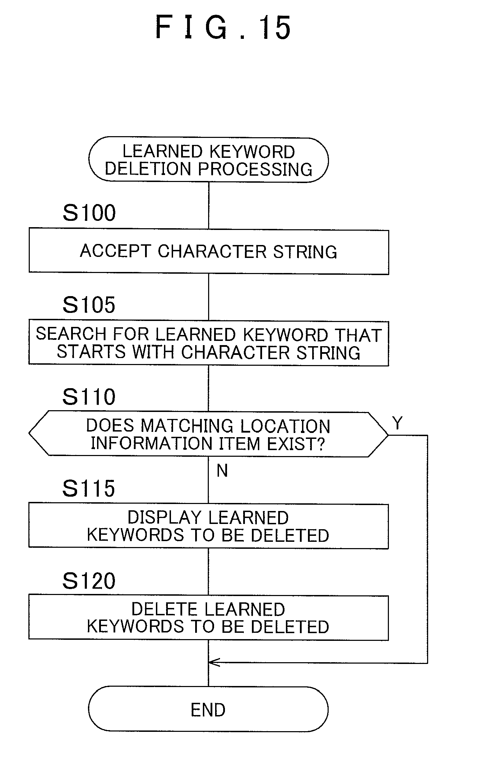

FIG. 15 is a flowchart that shows the procedure for the learned keyword deletion processing according to a third example.
Note that the location information items to be deleted have already been deleted from the destination data file 56.
The CPU 21 accepts the input of the character string in the search term setting space 101 in accordance with the operation of the character buttons 108 and the keyword buttons 104 to 106 on the search term input screen 100 (FIG. 8 and the like) (step 100).

When the character string is inputted in the search term setting space 101, the CPU 21 searches in the learned keyword data file 60 for the learned keywords that start with the character string (that is, the learned keywords whose keyword beginnings match the character string) (step 105).
In a case where a learned keyword is found, the CPU 21 uses the learned keyword to search through the search keys in the destination data file 56 and determines whether or not any location information items are found that match the learned keyword (step 110).

In a case where a matching location information item is found (Y at step 110), the CPU 21 accepts the search operation on the search term input screen 100 and continues the processing.
On the other hand, in a case where no matching location information item is found (N at step 110), the location information items that correspond to the learned keyword have been deleted, so the CPU 21 displays the learned keyword on the display 42 as a keyword to be deleted (step 115) and after the user performs the delete operation, deletes the learned keyword (step 120).

Thus, in a case where, among the keywords that are stored in the keyword storage unit, there is a keyword whose beginning matches the character string and the keyword that are held in the RAM 24, but the keyword is also included in a search object term (a search key) in a location information item that is to be deleted, the keyword is deleted from the keyword storage unit.

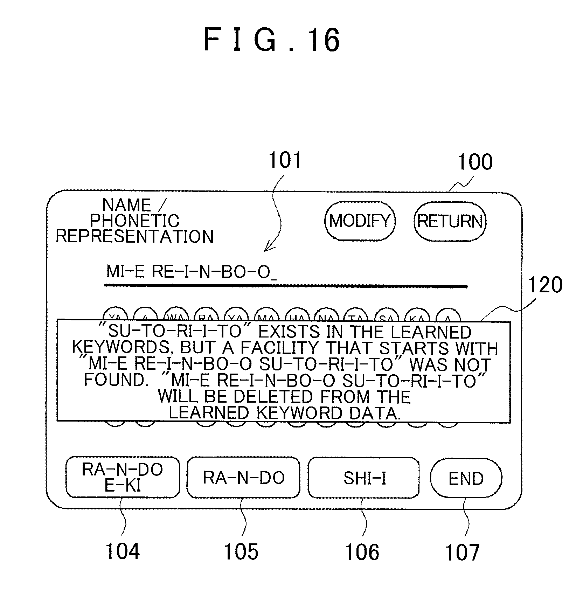

FIG. 16 is a figure that shows an example of the search term input screen 100 that is displayed on the display 42 at step 115.
On the search term input screen 100, when the user has inputted the character string "mi-e re-i-n-bo-o" in the search term setting space 101, the navigation device 1 displays a display 120 that says, "'su-to-ri-i-to' exists in the learned keywords, but a facility that starts with 'mi-e re-i-n-bo-o su-to-ri-i-to' was not found. 'mi-e re-i-n-bo-o su-to-ri-i-to' will be deleted from the learned keyword data."

When the user has inputted the character string "mi-e re-i-n-bo-o" in the search term setting space 101, the navigation device 1 searches and finds the matching learned keyword "mi-e re-i-n-bo-o su-to-ri-i-to", then searches for "mi-e re-i-n-bo-o / su-to-ri-i-to" in the destination data file 56, but does not find the matching location information item.
Therefore, although the navigation device 1 would ordinarily display "su-to-ri-i-to" in the keyword button 104, for example, it displays the display 120 instead.

The reason why "ra-n-do e-ki" is displayed in the keyword button 104 is that when the navigation device 1 searched in the destination data file 56 using the learned keyword "mi-e re-i-n-bo-o ra-n-do e-ki". it found the matching location information item.
The "ra-n-do" in the keyword button 105 and the "shi-i" in the keyword button 106 are displayed according to the ordinary keywords.

### Fourth Example

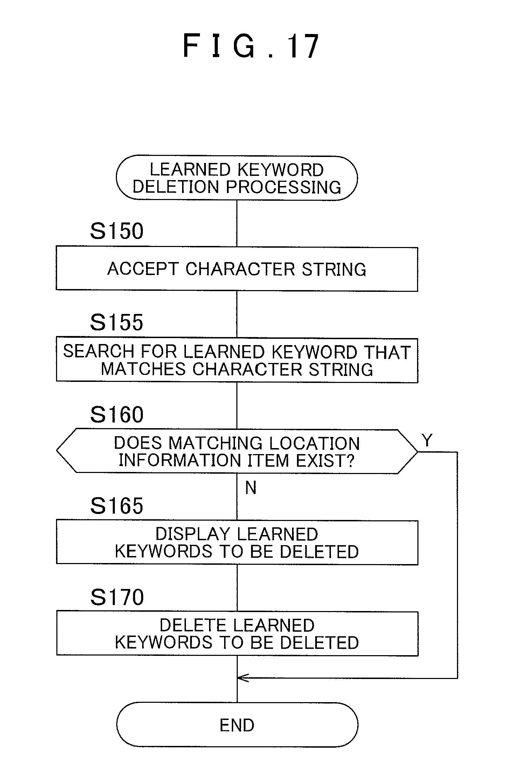

FIG. 17 is a flowchart that shows the procedure for the learned keyword deletion processing according to a fourth example.
Note that the location information items to be deleted have already been deleted from the destination data file 56.
The CPU 21 accepts the input of the character string (which may also be only one character) in accordance with the operation of the character buttons 108 on the search term input screen 100 (FIG. 8 and the like) and holds the character string in the RAM 24 (step 150).
Next, the CPU 21 searches for the learned keywords whose beginnings match the held character string and displays them in the keyword buttons (step 155).

In a case where the user selects one of the displayed learned keywords, the learned keyword is held in the RAM 24.
In a case where the learned keyword is more than seven characters, such as "mi-e re-i-n-bo-o / ra-n-do su-to-ri-i / to" or the like, such that after the user selects "mi-e re-i-n-boo", characters that follow the selected learned keyword exist, such as "ra-n-do su-to-ri-i" and the like that are displayed in the keyword buttons, all of the characters that follow the selected learned keyword are displayed and the entire learned keyword is inputted.

When the learned keyword is held in the RAM 24 in this manner, the CPU 21 uses the learned keyword to search through the destination data file 56 and determine whether or not there are any location information items that match the learned keyword (step 160).

In a case where a matching location information item is found (Y at step 160), the CPU 21 accepts the search operation on the search term input screen 100 and continues the processing.
On the other hand, in a case where no matching location information item is found (N at step 160), the location information items that correspond to the learned keyword have been deleted, so the CPU 21 displays the learned keyword on the display 42 as a keyword to be deleted (step 165) and after the user performs the delete operation, deletes the learned keyword (step 170).

Thus, in a case where, among the keywords that are stored in the keyword storage unit, there is a keyword that matches the character string and the keyword that are held in the RAM 24, but the keyword is also included in a search object term in a location information item that is to be deleted, the keyword is deleted from the keyword storage unit.

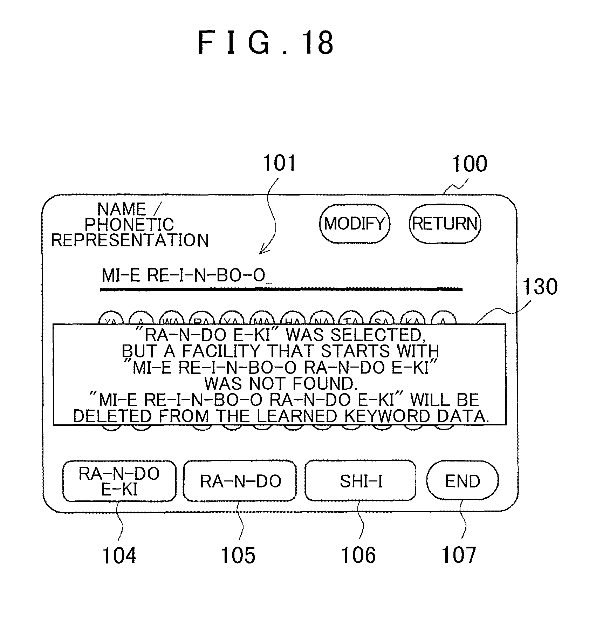

FIG. 18 is a figure that shows an example of the search term input screen 100 that is displayed on the display 42 at step 165.
On the search term input screen 100, when the user has inputted the character string "mi-e re-i-n-bo-o" in the search term setting space 101 and "ra-n-do e-ki" in the keyword button 104 has been selected, the navigation device 1 displays a display 130 that says, "'ran-do e-ki' was selected, but a facility that starts with 'mi-e re-i-n-bo-o ra-n-do e-ki' was not found. 'mi-e re-i-n-bo-o ra-n-do e-ki' will be deleted from the learned keyword data."
Note that the learned keyword is displayed in the keyword button 104, and the ordinary keywords are displayed in the keyword buttons 105 and 106.

The navigation device 1 displays the display 130 when the character string "mi-e re-i-n-bo-o" is held in the RAM 24 and the user selects the keyword button 104, the character string that is held in the RAM 24 is updated to "mi-e re-i-n-bo-o ra-n-do e-ki", and when the destination data file 56 is searched for that character string, no matching location information item is found.
Thus, in the fourth example, in a case where the user inputs a learned keyword, the navigation device 1 checks whether or not a location information item exists that matches the learned keyword, and if the location information item does not exist, the learned keyword is deleted.

The present embodiment has now been explained. In a case where a location information item is deleted by the procedures described above, the learned keyword that is used to search for the location information item can also be deleted.
In a case where a learned facility has been deleted, this makes it possible to prevent the learned keyword from becoming an uninterpolated keyword (a keyword for which a location information item is not found) for which no facility name exists and no candidate button exists.
The navigation device 1 may also be configured such that it includes a notification unit that, in a case where no location information item exists that matches the keyword that the user has selected, because the location information item has been deleted, provides a notification to that effect, such as "The location information item has been deleted." or the like.

In a case where a new facility is created and a location information item for it is added to the destination data file 56, the navigation device 1 receives, from a specified server, addition information that includes the location information for the facility, the keywords that are related to the location information, and the like. The navigation device 1 then adds the information to the destination data file 56, the ordinary keyword data file 58, and the like.
In a case where a location information item is added, the navigation device 1 does not perform any particular processing with respect to the learned keyword data file 60.

In the embodiment explained above, the navigation device 1 (a search device) was explained on the assumption that it would be used in Japan. That is, the navigation device 1 was explained as having Japanese specifications, such that the input device 41 that inputs the characters is configured from keys that represent the characters that are the input units in Japanese, and the data that are stored in the destination data file 56, the guidance point data file 57, and the like pertain to destination searching in Japan.
However, the environment in which the navigation device 1 is used is not limited to Japan. The screen displays described above can be made usable in any country by making the input device 41 and the specifications for the various types of data compatible with the particular region.

For example, the navigation device 1 (a destination input device) for a country other than Japan may be a device that is provided with alphabetic character keys that are compatible with English (English character) input.
The device may also be made compatible with input in any language, such as German, Spanish, French, Arabic, Chinese, Korean, Russian, and the like. In a case where the navigation device 1 is made compatible with Chinese-language input, for example, the input device 41 may be provided with a keyboard that is compatible with Chinese Pinyin input.

The input language does not necessarily have to be the language of the country (the region) where the navigation device 1 is used. For example, the navigation device 1 that uses German-language input may also be used in France. In that case, the data that are stored in the destination data file 56 and that are searched when the destination search is performed are made compatible with the input language, such that the data (for example, destination names, keywords, addresses, and the like) can be compared to the input characters.
Note that the data that are searched may also be stored such that they are compatible not only with the input language, but also with the language of the country (the region) where the navigation device 1 is used.
The data that are not searched when the destination search is performed, such as appended information data, for example, do not have to be stored in a form that is compatible with the input language. Even in the data that are not searched, it is acceptable to store, for example, data that are compatible with the input language, data that are compatible the language of the country (the region) where the navigation device 1 is used, and data that are compatible with both the input language and the language of the country (the region) where the navigation device 1 is used.

## Claims

1. A navigation device (1), comprising:
a location information storage unit (50) that stores searchable location information items that each include a search object term;
a character input unit (108) that accepts an input of a character;
a keyword storage unit (58, 60) that stores a keyword;
a keyword display unit (100) that acquires from the keyword storage unit a keyword that corresponds to the character that is inputted and displays the keyword;
a keyword selection unit (107) that accepts a selection of the displayed keyword;
a setting unit (21) that that sets, as a search term, one of the character that is inputted and the keyword that is selected;
a search unit (21) that searches through the stored location information items using the search term that has been set;
a keyword update unit (24) that stores, as a keyword in the keyword storage unit, a character string from which the set search term is formed;
a deletion information acquisition unit (16) that acquires deletion information that designates the location information items to be deleted;
a location information deletion unit (21) that deletes from the location information storage unit the location information items that are designated by the deletion information that was acquired; and
a keyword deletion unit (21) that, in a case where a keyword that is stored in the keyword storage unit is included in a search object term for a location information item that is to be deleted, deletes the keyword from the keyword storage unit.

2. The navigation device according to claim 1, wherein
the keyword deletion unit (21) deletes the keyword in a case where only one location information item is found that corresponds to the keyword.

3. The navigation device according to claim 1, wherein
the keyword deletion unit (21), in a case where, among the keywords that are stored in the keyword storage unit, there is a keyword whose beginning matches the character string and the keyword that are inputted, but the keyword is also included in the search object term in one of the location information items that is to be deleted, deletes the keyword from the keyword storage unit (60).

4. The navigation device according to claim 1, wherein
the keyword deletion unit (21), in a case where, among the keywords that are stored in the keyword storage unit, there is a keyword that matches the character string and the keyword that are inputted, but the keyword is also included in the search object term in one of the location information items that is to be deleted, deletes the keyword from the keyword storage unit (60).

5. The navigation device according to claim 1, further comprising:
a notification unit (21) that, in a case where no location information item exists that corresponds to the keyword whose selection has been accepted, because the corresponding location information item has been deleted, provides a notification to that effect.

6. A navigation program for a computer that is provided with a location information storage unit (50) that stores searchable location information items that each include a search object term and with a keyword storage unit that stores a keyword, the navigation program causing the computer to function as:
a character input unit (108) that accepts an input of a character;
a keyword display unit (100) that acquires a keyword that corresponds to the character that is inputted and displays the keyword;
a keyword selection unit (107) that accepts a selection of the displayed keyword;
a holding unit (24) that holds one of the character that is inputted and the keyword that is selected;
a setting unit (21) that that sets, as a search term, one of the character and the keyword that are held;
a search unit (21) that searches through the stored location information items using the search term that has been set;
a keyword update unit (24) that stores, as a keyword in the keyword storage unit, a character string from which the set search term is formed;
a deletion information acquisition unit (16) that acquires deletion information that designates the location information items to be deleted;
a location information deletion unit (21) that deletes from the location information storage unit the location information items that are designated by the deletion information that was acquired; and
a keyword deletion unit (21) that, in a case where a keyword that is stored in the keyword storage unit is included in a search object term for a location information item that is to be deleted, deletes the keyword from the keyword storage unit.
